Europäisches Patentamt

European Patent Office

Office européen des brevets

(11) Publication number: **0 198 538**
**A1**

## (12) EUROPEAN PATENT APPLICATION

(21) Application number: **86200564.2**

(51) Int. Cl.⁴: **A 23 D 5/02**

(22) Date of filing: **03.04.86**

(30) Priority: **12.04.85 US 722880**

(43) Date of publication of application: **22.10.86**
**Bulletin 86/43**

(84) Designated Contracting States: **AT BE CH DE FR GB IT LI NL**

(71) Applicant: **THE PROCTER & GAMBLE COMPANY, One Procter & Gamble Plaza, Cincinnati Ohio 45202 (US)**

(72) Inventor: **Braun, James Louis, 6391 Clough Pike Apt. 6, Cincinnati, OH 45244 (US)**
Inventor: **Purves, Edward Robert, 11725 Hollingsworth Way, Cincinnati, OH 45240 (US)**

(74) Representative: **Suslic, Lydia et al, Procter & Gamble European Technical Center Temselaan 100, B-1820 Strombeek-Bever (BE)**

(54) Process for preparing pourable solid shortening.

(57) This invention relates to a process for the preparation of discrete pieces of pourable solid shortening wherein molten fat at a temperature at which no visible solids are present is supercooled and is rapidly crystallized in droplets. By rapidly crystallizing the melted fat a uniform, firm network of crystals is formed. It has been found that rapid crystallizing, as opposed to crystal seeding or initial partial crystallization, yields fat particles having improved resistance to agglomeration. The resulting shortening composition is softer at ambient temperature for easy cleanup of cooking surfaces and utensils after use while maintaining improved resistance to agglomeration.

ACTORUM AG

0198538

# PROCESS FOR PREPARING
# POURABLE SOLID SHORTENING

James L. Braun
Edward R. Purves

## Technical Field

This invention relates to a process for preparation of discrete pieces of pourable solid shortening wherein molten fat is rapidly crystallized in droplets on a chilled surface.

## Background of the Invention

Practically all pourable solid frying fats which have been produced previously in powdered, flaked or particle form have a tendency, particularly after storage at room temperature for a short time or during shipment in warm climates, to become sticky and to form lumps which are not easily broken apart. The powdered particles or flakes agglomerate to form larger lumps or a solid mass. This tendency is increased by exposure to high storage temperatures, and can result in the melting of particulate fats suitable for cooking. Refrigerated storage can be employed to help prevent agglomeration and melting but is costly and not always practical. These problems of agglomeration upon storage have been countered primarily by three means: 1) encapsulation or enrobing, 2) use of high melting fat materials, often in combination with flow conditioning agents, and 3) tempering processes.

Shortening compositions with high melting point ranges having a solid fat content high enough to retain particle integrity at high storage temperatures are believed to impart a waxy or greasy taste to food cooked therein. A solid coating is formed on the food as it cools to below the high melting point range of a substantial percentage of the fats in the shortening. For this reason shortening compositions with lower melting point ranges, particularly those available in liquid or solid block form, have been extensively used for cooking. A composition which has both a high melting point range to prevent agglomeration on storage and a low melting point range at food eating temperatures to prevent a greasy taste perception on food cooked therein is disclosed by U.S. Patent 4,469,710 of Rielley, Krause & Fishter. This patent describes a pourable solid shortening wherein the solids content index is a minimum of 15% at 110°F to aid in avoiding agglomeration on storage and a maximum of 78% at 92°F to aid in preventing a greasy taste on food cooked therein. However, use of a product having high solids can result in problems in cleaning cooking surfaces and utensils. A solid coating of the fat forms on the cooking surfaces and utensils upon cooling after use. A product which retains its resistance to agglomeration at elevated temperatures while minimizing a waxy taste impression on foods cooked therein, but which is softer or has less solids content at lower temperatures, would be easier to clean from cooking surfaces and utensils after use.

The process employed in making the Rielley et al product comprises a) hydrogenating or hardening and optionally deodorizing the starting material fats, b) heating the fats to a temperature above the clear melting point of the fat mixture with stirring to obtain an homogeneous molten fat composition, c) rapidly chilling the homogeneous molten fat composition to crystallize sufficiently for further processing, d) extruding the crystallized fat composition into rods which are cut into small segments or pieces, and e) optionally tempering the fat segments at about 85°F to about 95°F for up to 6 days.

U.S. Patent 4,343,826 of McNaught discloses a process for preparing beads of fat that are uniform in size similar to the process used in making chocolate chips. A fat is melted at a temperature below about 80°C, cooled to about 1.5°C to 4.5°C below the clear melting point of the fat, allowed to form an amount of solids sufficient to permit the fat to hold its shape when formed into drops, formed into drops, and cooled and collected.

McNaught employs equipment similar to that used in making chocolate chips. An example suitable for use is a

0198538

chocolate depositer wherein the depositer contains a dropping head which is a series of nozzles through which the fat is forced by means of pistons. The fat forms drops at the end of the nozzles and the drops fall onto a belt as truncated cone-shaped beads. The beads are directed by the belt to a cooling chamber in order to promote further crystallization. Unlike the Rielley et al product, the McNaught composition requires refrigeration at 40°F-50°F (4°C-10°C) to avoid agglomeration.

The processes of Rielley et al. and McNaught are complicated and require meticulous control of fat viscosity. In McNaught's process if the fat is too fluid it can flow through the nozzles too fast and collect in puddles on the conveyor. If the fat is too viscous it solidifies in and clogs the nozzles. Likewise, in Rielley et al.'s process if the fat is too soft when extruded it cannot be properly cut into pieces and will not retain its shape. Thus, these processes are not suitable for preparation of a softer product which provides the performance benefit of easy cleanup after use while having improved resistance to agglomeration.

It is also known in the art to prepare fat particles by means of spray drying, spray chilling, flaking rolls, or chilling rolls. These processes have several disadvantages in that several complicated steps and expensive pieces of equipment are required. Spray drying or chilling is more suitable for preparing small fat particles having diameters measured in microns and not larger particles. Chilling and flaking rolls have the disadvantage of creating flakes having generally flat surfaces. These flakes have a high particle to particle contact area which contributes to agglomeration. Thus, an efficient process is needed for producing discrete pieces of fat which are storage stable at elevated temperatures and yet suitable for cooking with easy cleanup properties.

It is therefore an object of the present invention to provide an efficient process for the preparation of discrete pieces of fat.

It is a further object of the present invention to provide a process for the preparation of discrete pieces of pourable solid shortening having improved resistance to agglomeration.

It is a further object of the present invention to provide a process for the preparation of discrete pieces of pourable solid shortening which is easy to clean from cooking surfaces and utensils after use.

It is a further object of the present invention to provide a process for the preparation of discrete pieces of pourable solid shortening by means of rapid crystallization on a chilled surface, in a chilled mold, or in an immiscible liquid.

It is a further object of the present invention to provide a pourable solid shortening composition having improved resistance to agglomeration at elevated temperatures, but which is suitable for use in cooking and easy to clean up after use.

These and other objects will become apparent from the following description and examples. All percents are by weight unless otherwise specified.

## Summary of the Invention

This invention relates to a process for the preparation of discrete pieces of pourable solid shortening wherein molten fat which is above its melting point is supercooled and is rapidly crystallized in droplets, and the product formed thereby. By rapidly crystallizing the melted fat a uniform, firm network of crystals is formed. It has been found that rapid crystallizing, as opposed to crystal seeding or initial partial crystallization, yields fat particles having improved resistance to agglomeration. The resulting shortening composition is softer at ambient temperature for easy cleanup of cooking surfaces and utensils after use without decreasing its agglomeration resistance.

## Description of Preferred Embodiments

The present invention is a process for the preparation of discrete pieces of pourable solid fats having improved resistance to agglomeration and improved cleanup performance comprising: a) rapidly crystallizing melted fat from a temperature at which no visible solids are present by depositing the fat onto a chilled surface, chilled mold, or immiscible liquid; and b) collecting the crystallized fat pieces. The present invention further comprises the pourable solid shortening prepared by this process.

As used herein, the term "particle" denotes discrete pieces of pourable solid fats.

The term "solids content index" as used herein denotes the percent by weight of solids in a sample of fat at a given temperature as determined by pulsed nuclear magnetic resonance, hereinafter described.

Starting materials suitable for use in the process of the present invention comprise edible fats and oils and mixtures thereof. Any of a variety of glyceride-based fat materials can be used in the present invention provided that the solids content is such as to be suitable for use in cooking foods. The starting fats should have been refined, bleached and may optionally be deodorized to remove off-flavors. Refining, bleaching and deodorizing are well-known processes and will not be described herein. Specific reference to such treatments can be found in D. Swern, Ed., Bailey's Industrial Oil and Fat Products, 3rd ed., Interscience Publishers, 1964.

The term "fat" used herein shall refer to edible fats and oils comprising triglycerides, fatty acids, fatty alcohols, and esters of such acids and alcohols. Especially appropriate for use in the present invention are triglycerides of straight chain or branched chain, saturated or unsaturated, monocarboxylic acids having from 10 to 28 carbon atoms. Suitable sources of such fats are: 1) vegetable fats and oils such as soybean, olive, corn, safflower, sunflower, cottonseed, canola, rapeseed, sesame seed, nasturtium seed, tiger seed, ricebran, wallflower, and mustard seed; 2) meat fats such as tallow or lard; 3) marine oils such as menhaden, pilcherd, sardine, whale or herring; 4) nut fats and oils such as coconut, palm, palm kernel, babassu kernel, or peanut; 5) milkfat, butterfat; 6) cocoa butter and cocoa butter substitutes such as shea, or illipe butter; and 7) synthetic fats.

The preferred starting materials are edible polymorphic vegetable fats, and mixtures thereof, comprising triglycerides having saturated or unsaturated acyl groups predominately in the range of from 12 to 24 carbon atoms such as lauroyl, lauroleoyl, myristoyl, myristoleoyl, palmitoyl, palmitoleoyl, stearoyl, oleoyl, linoleoyl, arachidoyl, arachidonoyl, behenoyl, erucoyl, and the like. Branched chain saturated or unsaturated acyl groups are also useful herein. In particular, the preferred starting fat comprises a blend of beta tending vegetable oils.

A stabilizer can be employed herein to protect against oxidative deterioration at high temperatures, such as increases in viscosity and fatty acid content, formation of polymerized fatty matter, increase in refractive index, destruction of tocopherols, and intensification of foaming tendencies due to the formation of oxidized and polymerized constitutents. Silicone oils, particularly methyl and ethyl silicones, are useful for this purpose. Suitable viscosities of the silicones are in the range of from about 50 to about 1,000,000, preferably from about 100 to about 1000 centistokes at 25°C. In the present invention it is appropriate to employ the silicone at a level of 0 to 10 parts per million (ppm) by weight, and 1 to 5 ppm by weight is preferred. Appropriate means must be used to assure substantially uniform dispersion of the small amount of silicone throughout the shortening composition. The silicone is added to the starting material after completion of the refining, bleaching and optional deodorizing processes.

Various other additives can be used herein provided that they are edible and aesthetically desirable and do not have a detrimental effect upon the melting and crystallization characteristics of the shortening. The types of additives

0198538

employed should be consistent with the ultimate end use of the shortening, which primarily comprises various frying or griddling, in particular, deep-fat frying. The process of the present invention is used to prepare fats which can normally contain minor amounts of optional flavorings, emulsifiers, anti-spattering agents, anti-sticking agents, or the like.

Fats have been categorized in accordance with the overall tendency of their triglyceride solids to crystallize in a specific polymorphic phase as alpha-tending, beta-tending, and beta-prime-tending. As used herein, the term "beta-tending" denotes a triglyceride hardstock which has a propensity for crystallizing in the beta polymorphic phase rather than in either the alpha or beta-prime phases. The term "non-beta-tending" is used herein to denote triglyceride hardstocks with a propensity for crystallizing in either the alpha or beta-prime polymorphic phases. Triglyceride hardstocks known as beta-tending include fats and oils such as lard, sunflowerseed oil, linseed oil, hazelnut oil, soybean oil, peanut oil, olive oil, corn oil, and other fats containing acyl groups of at least 8 carbon atoms. Non-beta-tending hardstocks include fats such as cottonseed oil, palm oil, tallow, whale and other fish oils, and other fats containing a substantial portion of acyl groups having 20 to 24 carbon atoms.

Both beta-tending and non-beta-tending fats can be used as starting materials for the present invention. However, beta-tending fats are preferred due to the higher melting point of the beta crystals formed in the solid shortening. The result is a product with a greater amount of solids at high temperatures which provides improved storage stability. Non-beta-tending materials require hardening to achieve a higher level of solids in the starting material. With non-beta-tending materials a higher level of solids, and the corresponding thermodynamic stability, cannot be achieved through tempering. This preference for the beta phase is in contrast to currently available solid shortenings which are formulated to contain a major amount of the beta-prime phase to provide a softer texture suitable for spooning or dipping in handling.

Compositions with less than about 10% beta phase crystals present can be capable of resisting agglomeration at 110°F and yet not impart a greasy or waxy taste to food cooked therein. It is believed this can be achieved due to the combination of starting material selection and processing. The solids content of fat varies with the fat chain length and with the degree of saturation. The selection of fats containing a high solids content, or hardening of the selected fat, will enable it to resist agglomeration at high storage temperatures without the presence of a large amount of beta phase crystals.

A starting material fat containing sufficiently high solids content may be obtained by either 1) hydrogenating, or by 2) blending of fats of different iodine values. Hydrogenation can be carried out by conventional methods and usually consists of a batch process wherein the fat composition is contacted with hydrogen in the presence of a nickel catalyst. The solids content index of a fat also can be increased by adding to it a small amount of the corresponding fat with a low iodine value. The iodine value of a fat indicates the number of grams of iodine equivalent to the halogen absorbed by a 100 gram sample. In general, the lower the iodine value of a given fat the greater will be its solids content at a given temperature and the more saturated it will be. The iodine value can readily be determined by known methods. Although starting materials generated by either method are suitable for use in the present invention, blending of fats of different iodine values is preferred. Blending of starting materials of different iodine values allows greater flexibility in control of the melting profile.

The starting material fats for use in the process of the present invention must be completely melted. This can be achieved by heating the fats, preferably with mixing to a temperature well above the clear melting point of the fats to assure dissolution of all fat crystal nuclei. The heating vessel can be blanketed with an inert gas such as nitrogen to eliminate the oxidation of the fat. Excessive heating should be avoided as it is uneconomical and also could result in degradation of the fat composition.

The process of the present invention comprises rapidly crystallizing fat by depositing drops of the fat onto a chilled surface, chilled mold, or immiscible liquid. The surface, mold, or liquid is kept as cold as possible, and has a maximum temperature dependent upon the melting point of the fat composition. Suitable liquids which can be employed include water, glycol, alcohol, or mixtures of liquids immiscible with fat. Preferably a chilled surface is employed at a temperature of from about 20°F (-7°C) to about 70°F (21°C) and comprises a conveyor belt cooled by appropriate means, such as by inert gas, air, cold water, or other suitable coolants, having a temperature as cold as possible, preferably at from about 0°F (-18°C) to about 70°F (21°C).

The term "rapid crystallization" as used herein denotes immediate crystallization from the molten state, at which no solids are visible, without use of agitation or working. The fat is at a feed temperature at which no visible solids are present. Typically, this is about 30°F (-1°C) to about 200°F (93°C). The maximum feed temperature is that at which the fat drop is distorted in shape prior to its crystallization on the chilled surface or mold. Preferably, the fat is supercooled to below this distortion temperature range by suitable equipment in a precooling step.

The term "supercooling" as used herein denotes that the fat is cooled below the melting point but is substantially free of visible solids. The supercooling can be achieved by pumping the fat through a scraped-wall heat exchanger, a plate and frame heat exchanger, other equivalent equipment, or a combination thereof. The fat is then fed into equipment, hereinafter denoted as a dropformer, suitable for depositing droplets of the fat onto a conveyor, chilled surface or mold, or immiscible liquid. Preferred for use herein is a type of unit wherein the fat is pumped into a cylinder having multiple orifices for dropping the melted fat therefrom. An example of suitable equipment for use herein is disclosed in U.S. Patent 4,279,579 of Froeschke, issued July 21, 1981.

Any conditions that delay rapid crystallization have an adverse effect upon the product generated. For example, an increase in hold time prior to deposit which allows partial crystallization to occur in the fat is undesirable. A lower hold temperature prior to rapid crystallization of the fat is also detrimental. Any conditions which allow the initial formation of crystals from the high melting point fats prior to solidification adversely affect the product generated by increasing agglomeration and/or increasing any tempering time required for the fat particles to reach a stable polymorphic state. This is apparently due to fractionation of the high and low melting solids. If the high melting point fats are precrystallized, the low melting fractions comprise the substantial portion of the crystal lattices formed upon deposit on the chilled surface, chilled mold, or immiscible liquid. This increases product agglomeration. If sufficient precrystallization of high melting point fractions occurs, particles cannot be formed because the fat is too soft. Rapid and immediate crystallization from the molten fat avoids this and generates fat particles having improved resistance to agglomeration. Continuous chilling of the crystallized fat, such as by means of a cooling tunnel along a conveyor, is desired but not necessary to further solidify the fat as rapidly as possible.

The final step of the process of the present invention comprises collecting the crystallized fat pieces from the chilled surface, chilled mold, or immiscible liquid. This can be achieved by any suitable means, such as by use of a scraper bar or doctor blade to remove the fat particles from the conveyor belt directly onto a packaging line, inverting the mold to permit the fat to be removed, use of a screening device to remove the fat from the liquid, or allowing the fat to float to the top of the liquid and removing it by means of a scraper bar.

The shape of the resulting fat particles can vary depending upon the dropformer employed. Suitable shapes include large particles, pellets, spears, hemispheres, ellipsoids, cubes, cylinders, half cylinders, and the like. The geometric form of the particles is preferably that of a hemisphere-like shape. The hemisphere-like particles preferably have a diameter of from about 3 mm to about 25 mm and a height of from about 1 mm to about 10 mm. The pieces may be either substantially uniform in size and shape or irregular in size and shape. Preferably the particles are substantially uniform in size and shape to minimize contact and thereby minimize agglomeration.

Optionally, the fat particles are tempered by maintaining them at a temperature of about 85°F (29°C) to about 95°F (35°C) for a period of 0 to about 144 hours. This permits transformation of the fat crystals to the higher melting thermodynamically stable beta polymorphic phase. The speed of crystal transformation is temperature dependent, with the speed becoming faster in proportion as the temperature becomes higher. The preferred tempering conditions are at a temperature of 88°F (31°C) to 92°F (33°C) for a minimum of 72 hours.

The fat particles have a minimum solids content index of about 10% at 110°F (43°C) and a maximum solids content index of about 78% at 92°F (33°C). A solids content index of less than 14% at 110°F (43°C) is preferred. This constitutes an improvement in resistance to agglomeration. Previously known compositions required a higher solids content to resist agglomeration at 110°F (43°C). The maximum solids content index of 78% at 92°F (33°C) is necessary to obtain acceptable organoleptic quality for foods cooked therein.

The fat particles of the present invention provide the additional performance benefit of easy cleanup after use. Because the fat is softer, or has a lower solids content index at ambient temperature, it is easier to wash from cooking surfaces and utensils. The softer fat also aids in producing better eating quality for foods cooked therein because it helps eliminate waxiness. This results without impairment of the resistance to agglomeration of the fat at elevated temperatures and is due to the specific selection of starting materials and processing conditions. The process described herein provides softer fat particles having stronger crystal lattices.

TESTING METHODS

A. Solids Content Index Method

The solid contents index represents the percent by weight of solids in the sample of fat at a given temperature as determined by pulsed nuclear magnetic resonance. The measurements were all determined using the general method described in Madison and Hill, J. Am. Oil Chem. Soc., 55, 328-331 (1978), hereinafter denoted PNMR, using a Praxis Pulsed NMR SFC 900 Solid Fat Analyzer. Specifically, the solids content indices were measured using the following sample preparation procedure. Fat samples were melted and added to PNMR tubes. They were melted at 140°F (60°C) and held for 30 minutes. The samples were then shaken and tempered at 80°F (27°C) for 5 minutes, 32°F (0°C) for 5 minutes, 80°F (27°C) for 30 minutes, and 32°F (0°C) for 5 minutes. The samples were tempered at 90°F ± 5°F for 0, 1, 3 or 6 days and then stored at 40°F (4°C) to prevent any further crystal phase transformations. To determine solids content indices the samples were then placed into baths of increasing temperatures, i.e., 50°F (10°C), 70°F (21°C), 80°F (27°C), 92°F (33°C), 105°F (41°C), 110°F (43°C), and 120°F (49°C). After allowing 20 minutes for equilibration at each temperature, the solids content index reading was measured in the instrument.

B. Agglomeration Test Methods

1. Vial Agglomeration Method

The level of agglomeration was determined by assigning grading numbers of 1 to 15 to each sample, wherein 1 represented no agglomeration and the higher numbers corresponded to increasing levels of agglomeration. The fat samples were removed to ovens maintained at 110°F ± 2°F (43°C ± 1°C). After a storage period of 48 hours at this temperature, the vials were removed and allowed to equilibrate at room temperature overnight. The samples were then agitated and graded by visual inspection. Agglomeration grades up to level 6 were considered acceptable because agglomeration was minimal and the product easily flowed from the container with shaking or tapping. Grades 1 through 4 were preferred. Grades 5 and 6 were considered marginally acceptable. Grades 7 to 15 represented unacceptable levels of agglomeration. At grades 7 and 8 an agglomerated mass of product formed and hard blows to the container were required to cause the product to break into large clumps of pellets. At higher grades the product was agglomerated sufficiently to prevent any flowability and began melting. The following grading scale was employed:

1. Product poured out easily, no agglomeration.

2. Slight shaking of container required to initiate flow.

3. Hard shaking of container required to initiate flow.

4. Light blows (tapping) of container on hard surface required.

5. Hard blows of container on hard surface required.

6. Hard blows required to break pellets apart into groups of 2 or 3 pieces.

7. Hard blows to container required to break pellets apart into groups of 4 or more.

8. Repeated hard blows required to break away a few pellets.

9. No pieces or lumps broke away from mass. Pellets have slight disfigurement.

10. Pellets melted together and disfigured, but distinguishable as pellets.

11. Product approximately 20% melted, 80% disfigured.

12. Product approximately 50% melted, 50% disfigured.

13. Product approximately 70% melted, 30% disfigured.

14. Product approximately 90% melted, 10% disfigured.

15. Product 100% melted into a liquid.

2. Case Agglomeration Method

A second agglomeration test method, hereinafter denoted as case agglomeration test, was employed to test product packaged in 15 or 20 pound bags with two such bags packed into a carton or box. The cartons containing product were stored at 110°F (43°C) for at least 48 hours followed by storage at 70°F (21°C) for at least 24 hours. The pourable shortening particles were removed from the packaging and poured through a screen having one inch (2.54 cm) square openings. A grading number of 1 to 4 was assigned to each sample based upon the size and number of agglomerated clumps of fat pieces which did not pass through the screen. Grade 4 had no agglomeration and was preferred. Grade 3 was considered acceptable. Grade 2 was marginally acceptable and Grade 1 represented unacceptable levels of agglomeration. The following grading scale was employed:

4. Preferred - All product passed through screen and was not sticky.

3. Acceptable - Four or less 2 to 3 inch clumps or one 4 inch clump remained on screen but were easily broken to pass through the screen. Alternatively, a 1 foot drop of the product caused all of it to pass through the screen or only a few 2 to 3 inch clumps remained on the screen.

2. Marginally acceptable - After a 1 foot drop of the product, two or more 4 to 6 inch clumps that were easily broken apart, or sticky product with three or more 2 to 3 inch clumps that were not easily broken apart.

1. Unacceptable - After a 1 foot drop of the product, one or more 7 inch clumps, or sticky product with four or more 2 to 4 inch clumps not easily broken apart.

C. Beta Crystal Measurement

The percentage of beta phase crystals present in the shortening compositions was determined by X-ray diffraction using the following method. Samples were prepared by slicing three fat segments, either untempered or previously tempered at 90°F ± 5°F (32°C ± 3°C), and fastening them into a 15 mm. by 20 mm. window of a 38 mm. by 38 mm. aluminum sample holder backed with transparent tape. Minimal pressure and friction was applied in sample placement to avoid heating the samples which could cause phase changes. A Phillips XRG 3100 X-ray Diffraction Spectrophotometer was employed to measure the presence of beta and beta-prime crystal phases.

The following examples illustrate the present invention without intending to be limiting thereof. All percentages are by weight unless otherwise stated.


## Example 1

Example 1 demonstrates that the process of the present invention provides fat particles having improved agglomeration compared to the Rielley et al process and to processes using a precrystallizing step.

A blend of refined, bleached, and deodorized soybean oils having an iodine value of 57 was heated to 140°F (60°C) to assure no crystal nuclei were present. It was then pumped through a scraped-wall heat exchanger where it was supercooled to 120°F (45°C), and contained no visible solids. The cooled fat was then deposited onto a cold metal plate having molds hemispherical in shape to form solid shortening particles designated as A-1. The temperature of the plate was 40°F (4°C).

A portion of the stream of the above fat which was heated and pumped through a scraped-wall heat exchanger was then pumped into a crystallizer tank and held at 120°F (49°C) under agitation. The fat was then deposited onto a cold metal plate held at a temperature of 40°F (4°C) in the same manner to form particles designated as A-2 and A-3 after being held in the crystallization tank for 2 and 4 hours, respectively.

The same fat was used to prepare pourable solid shortening designated as A-4, as described in U.S. Patent 4,469,710 of Rielley et al., said method herein incorporated by reference.

The fat pieces were tested for agglomeration at 110°F (43°C) and percent beta crystal phase and were then tempered at 93°F (34°C). The fats were then tested periodically for agglomeration at 110°F (43°C) and percent beta crystal phase. The resulting data is summarized in Table 1. Fats A-2 and A-3 prepared using the crystallizer tank, and Fat A-4 prepared using and the method of the Rielley et al. patent, had increased tempering time and increased agglomeration compared to Fat A-1 prepared using the process of the present invention with no hold time for crystal formation prior to depositing.

## Table I

| Fat | Hold Time (hrs) | Initial %B | Days at 93°F to reach | | Vial Agglomeration | |
|-----|-----|-----|-----|-----|-----|-----|
| | | | 60%B | 70%B | Initial | Tempered |
| A-1 | 0 | 16 | 4 | 7 | 5 | 4 |
| A-2 | 2 | 27 | 7 | 18 | 8 | 5 |
| A-3 | 4 | 32 | 10 | 17 | 9 | 5 |
| A-4 | 0 | 15 | 6 | 12 | 8 | 4 |

Additional fat blends were used to prepare fat particles as above without use of the crystallizer tank. Fat B was a blend of soybean oils having an iodine value of 64, and fat C was a blend of soybean oils having an iodine value of 60. The fats were tested for agglomeration, tempered at 93°F (34°C), and again tested. The resulting data is summarized in Table II and demonstrates that fats with a solids content index of less than 15 at 110°F, prepared according to the process of the present invention have acceptable agglomeration grades.

## Table II

| Fat | C | B |
|-----|---|---|
| % Solid Content Index | | |
| 50°F | 70.3 | 67.1 |
| 70°F | 55.8 | 49.0 |
| 80°F | 52.5 | 44.8 |
| 92°F | 37.3 | 31.3 |
| 105°F | 17.4 | 17.3 |
| 110°F | 10.5 | 13.2 |
| 120°F | 4.2 | 4.1 |
| Vial Agglomeration at 110°F | | |
| Untempered | 6 | 4.5 |
| Tempered | 5 | -- |

## Example 2

Example 2 demonstrates that immediate rapid crystallization of the fat from the molten state without visible solids is needed to obtain product having the desired characteristics.

The process of Example 1 was employed to prepare solid shortening particles of the same formula as Example 1 composition A-1 through A-4 except that the fat was held under agitation in the crystallizer tank at temperatures of 105°F (41°C), 110°F (43°C) and 120°F (49°C) for only the time period required to cool to the respective temperatures. Visible solids formed in the feed oil for the fat at 105°F (41°C) and 110°F (43°C). The particles were formed, tempered and analyzed for beta crystals and agglomeration as in Example 1. The resulting data is summarized in Table III. The fat particles prepared using the lower temperatures had increased tempering time and increased agglomeration compared to the fat held at 120°F (49°C) and Fat A-1 of Example 1 prepared using no hold time.

## Table III

| Hold | Vial Agglomeration | |
| Temperature | Initial | Tempered |
|---|---|---|
| 105°F | 13 | – |
| 110°F | 10 | 5 |
| 120°F | 5 | 4 |

## Example 3

Example 3 demonstrates use of a dropformer to deposit the fat on a chilled belt prior to solids formation for rapid crystallization.

A soybean oil blend having the formula of Example 1 composition A-1 through A-4 was heated to 140°F (60°C) to assure no crystal nuclei were present. It was then cooled to 120°F (49°C). The cooled fat was then pumped through a dropformer as described in U.S. Patent 4,279,579 of Froeschke, issued July 21, 1981, available from Sandvik Process Systems, Inc. of Fellbach, West Germany. This unit deposited the fat in drops from a cylinder having multiple orifices onto a chilled conveyor belt. The feed temperature of the fat was 120°F (49°C) and its discharge temperature was about 61°F (16°C). The conveyor belt was cooled by chilled water at a temperature of about 66°F (19°C) and the belt speed was about 6 meters per minute. The fat deposits were cooled for about 1½ minutes, during which time crystallization occurred. The crystallized fat pieces, denoted herein as A-5, were removed from the conveyor belt by means of a doctor blade. Portions of the fat were tempered at 93°F (34°C) and again analyzed for these attributes.

Three other process runs were conducted using the above equipment except that for run A-6 the feed temperature was 125°F (52°C); for run A-7 the feed temperature was 140°F (60°C)' and for run A-8 the feed temperature was 110°F (43°C) and the fat was held in a precrystallizer tank at 110°F (43°C) for about 2 hours, prior to depositing on the cooled belt. Portions of the fat samples were tempered at

0198538

93°F (34°C). The product in run A-8 did not crystallize well and was soft and mushy. Runs A-5, A-6 and A-7 resulted in acceptable product. Samples from all runs were analyzed for percent beta crystal phase and agglomeration. The data are summarized in Table IV. The percent beta for the tempered product was measured after 8 days of tempering at 93°F (34°C). The data demonstrate that precrystallization of the feed oil yields unacceptable product and that a high level of beta crystals is not necessary to have product resistant to agglomeration.

### Table IV

| Fat | Feed Temp. | Initial %B | %B Tempered | Vial Agglomeration | |
| --- | --- | --- | --- | --- | --- |
| | | | | Initial | Tempered |
| A-5 | 120°F | 34.2 | 75.2 | 5 | 4 |
| A-6 | 125°F | 25.0 | 81.6 | 5 | 4 |
| A-7 | 140°F | 27.6 | 70.6 | 5 | 4 |
| A-8 | 110°F | 61.6 | 82.5 | 11 | 8 |

### Example 4

Example 4 demonstrates the improved cleanup performance of the pourable solid shortening of the present invention.

Pourable solid shortening was prepared as in Example 3 from two formulas. Fat D was prepared from a blend of soybean oils having an iodine value of about 70. Fat E was prepared from a blend of 65% soybean oil and 35% of refined bleached cottonseed oil having an iodine value of about 70. Fat A-9 was prepared from the blend of soybean oils used in Example I according to the process of Rielley et al. Fat F was bought commercially and was a solid block plastic shortening, which was spoonable and had a solids content index of 1 at 110°F (43°C) and an iodine value of about 69. The fats were analyzed for agglomeration and subjected to cleanup performance evaluation.

-20-                                    0198538

Each fat sample was melted in a 150°F (66°C) water
bath. A syringe was used to transfer 3 cc of each fat onto
an aluminum tray. A 250 ml beaker was placed on top of the
fat to aid in spreading it evenly. The trays were placed in a
constant temperature room at 70°F (21°C) for at least
3 hours. Ten panelists were given a bowl of 115°F (46°C)
solution of 0.1% Joy[R] in water. Joy is a commercially
available liquid soap for washing dishes by hand. The
panelists cleaned the fats from the tray using paper towels
which had been immersed in the Joy solution. Fat F was
used as a reference and the ease of cleaning the fats from
the tray compared to fat F using the following scales. If the
panelist rated a fat more difficult to clean than fat F a grade
was assigned as follows:

9    Extreme difference
8    Much difference
7    Moderate difference
6    Slight difference
5    No difference

If a panelist rated a fat as easier to clean than fat L a grade
was assigned as follows:

5    No difference
4    Slight difference
3    Moderate difference
2    Much difference
1    Extreme difference

The resulting data were analyzed statistically and are
summarized in Table V.

### Table V

| Fat | D | E | A-9 | F |
|---|---|---|---|---|
| % Solid Content Index | | | | |
| 50°F | 48.3 | 44.5 | 70.5 | . 63.2 |
| 70°F | 39.0 | 36.6 | 56.3 | 43.3 |
| 80°F | 37.3 | 33.6 | 52.9 | 36.4 |
| 92°F | 28.7 | 27.4 | 40.4 | 19.0 |
| 105°F | 19.8 | 18.1 | 20.5 | 4.9 |
| 110°F | 16.9 | 14.7 | 16.5 | 1.2 |
| 120°F | 10.4 | 8.7 | 8.3 | 0 |
| Vial Agglomeration | | | | |
| | 5.5 | 5.5 | 5.4 | 15.0 |
| Cleanup Grade | | | | |
| | 5.8 | 6.2 | 8.5 | 5.0 |

As can be seen from the data, fats D and E of the present invention were easier to clean than fat A-9 of Rielley et al, and were comparable to a soft spoonable shortening having a solids content index of 1 at 110°F (43°C).

### Example 5

Example 5 demonstrates improved agglomeration and cleanup performance of fat prepared by the claimed process when compared to that prepared by the process of Rielley et al. A pourable solid shortening G was prepared from a blend of soybean oils having an iodine value of about 71, using the process of Example 3. A shortening similar to Example I, A-10, was prepared using the method of Rielley et al. The shortenings were analyzed using the methods described previously for solids content index, cleanup performance, and agglomeration using the case agglomeration method. The resulting data are summarized in Table VI and demonstrate improved agglomeration and cleanup performance for the shortening of the present invention.

## Table VI

| Fat | G | A-10 |
|-----|---|------|

% Solid Fat Content Index

| | | |
|-----|------|------|
| 50°F | 49.8 | 71.7 |
| 70°F | 41.4 | 58.8 |
| 80°F | 39.7 | 56.0 |
| 92°F | 31.2 | 42.4 |
| 105°F | 20.9 | 24.1 |
| 110°F | 17.1 | 17.4 |
| 120°F | 10.0 | 8.4 |

Case Agglomeration

| At 24 hours | Tempered 3 weeks |
|-------------|------------------|
| 3 | 2 |

Cleanup Grade

| | |
|-----|-----|
| 7.5 | 8.8 |

0198538

CLAIMS

1. A process for the preparation of discrete pieces of pourable solid fats having improved resistance to agglomeration comprising:

  a) rapidly crystallizing molten fat from a temperature at which no visible solids are present by depositing drops of the fat onto a chilled surface, chilled mold, or immiscible liquid; and

  b) collecting the crystallized fat pieces.

2. The process of Claim 1 wherein the discrete pieces of pourable solid fats comprise triglycerides of saturated or unsaturated monocarboxylic acids having from 10 to 28 carbon atoms.

3. The process of Claim 1 wherein discrete pieces of pourable solid fats are prepared from fats selected from the group consisting of vegetable fats and oils, meat fats, fish oils, nut fats, milk fats, cocoa butter, cocoa butter substitutes, and synthetic fats.

4. The process of Claim 1 wherein the discrete pieces of pourable solid fats contain an additive selected from the group consisting of a stabilizer, flavoring, emulsifier, anti-spattering agent, anti-sticking agent, and antioxidant.

5. The process of Claim 1 wherein the molten fat is precooled to a temperature of from about 30°F (-1°C) to about 200°F (93°C) prior to deposit onto the chilled surface.

6. The process of Claim 5 wherein the molten fat is precooled by means of a scraped-wall heat exchanger or plate heat exchanger.

7. The process of Claim 1 wherein the fat is deposited by means of a dropformer onto a chilled conveyor belt.

8. The process of Claim 7 wherein the conveyor belt is chilled to a temperature of from about 0°F (-18°C) to about 70°F (21°C).

9. The process of Claim 7 wherein the conveyor belt is transported through a cooling tunnel to complete crystallization of the fat as rapidly as possible.

10. The process of Claim 1 wherein no crystallization of fat occurs prior to contact with the chilled surface.

11. The process of Claim 1 wherein the discrete pieces of pourable solid fats comprise hemisphere-like shape having a diameter of from about 3 mm to about 25 mm and a height of from about 1 mm to 10 mm.

12. A process for the preparation of discrete pieces of pourable solid fats having improved resistance to agglomeration comprising:

   a) heating the fat to at least about 140°F (60°C) to dissolve all crystal nuclei;

   b) supercooling the fat to a temperature of at least 200°F (93°C);

   c) rapidly crystallizing the fat by depositing drops of the fat onto a chilled surface or mold;

   d) further cooling the fat to further crystallize; and

   e) collecting the crystallized fat pieces from the chilled surface or mold.

13. A product prepared according to Claim 1.

14. A product prepared according to Claim 4.

- 3 -

0198538

15.  A shortening composition suitable for cooking and frying comprising a plurality of discrete pieces of pourable solid edible fats which resist agglomeration up to 110°F (43°C) and resist development of a waxy taste in foods cooked therein and having a solids content index of less than 14% at 110°F (43°C) and a maximum solids content index of 78% at 92°F (33°C), said fats comprising triglycerides of saturated or unsaturated monocarboxylic acids having from 10 to 28 carbon atoms.

16.  The shortening composition of Claim 14 wherein the discrete pieces of pourable solid fats comprise hemisphere-like shape having a diameter of from about 3 mm to 25 mm and a height of from about 1 mm to 10 mm.

17.  The shortening composition of Claim 14 to which has been added at least one additive selected from the group consisting of a stabilizer, flavoring, emulsifier, anti-spattering agent, and antioxidant.

NSM/fm/3384

European Patent
Office

**EUROPEAN SEARCH REPORT**

Application number

EP 86 20 0564

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| X | GB-A- 821 995 (BRONGER HEYO TEN KATE) <br><br> * Claims 1,2; column 1, lines 22-44,91-94; page 2, lines 1-19 * | 1-3,5, 8,10, 12,13, 15 | A 23 D 5/02 |
| Y | | 4,6,7, 9,11, 14,16, 17 | |
| Y | DE-C- 386 588 (F. HOMANN et al.) <br> * Claim ; figure 1 * | 9 | |
| Y | DE-C- 536 566 (C.E. LINEBARGER) <br> * Claim 1; page 2, lines 45-56, 97-122 * | 11 | TECHNICAL FIELDS SEARCHED (Int. Cl.4) <br><br> A 23 D |
| Y | FR-A- 480 669 (J.W. LEITCH) <br> * Page 1, column 2, paragraph 2 * | 11 | |
| Y,D | EP-A-0 056 682 (UNILEVER) <br><br> * Page 3, paragraphs 2,4; page 5, lines 28-33 * | 4,6,7, 11,14, 16,17 | |

The present search report has been drawn up for all claims

| Place of search | Date of completion of the search | Examiner |
|---|---|---|
| THE HAGUE | 30-07-1986 | PEETERS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82